(19) **Europäisches Patentamt**
**European Patent Office**
**Office européen des brevets**

(11) **EP 4 600 696 A1**

(12) **EUROPEAN PATENT APPLICATION**

(43) Date of publication:
**13.08.2025 Bulletin 2025/33**

(21) Application number: **24156347.7**

(22) Date of filing: **07.02.2024**

(51) International Patent Classification (IPC):
*G01S 13/60* (2006.01)     *G01S 7/03* (2006.01)
*G01S 7/292* (2006.01)     *G01S 7/35* (2006.01)
*G01S 7/41* (2006.01)     *G01S 13/931* (2020.01)
*G01S 7/40* (2006.01)

(52) Cooperative Patent Classification (CPC):
**G01S 7/038; G01S 7/003; G01S 7/292;**
**G01S 7/354; G01S 7/40; G01S 7/414; G01S 7/415;**
**G01S 13/60; G01S 13/931;** G01S 7/2883;
G01S 7/356; G01S 7/4026; G01S 2013/9316;
G01S 2013/932

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **VOLVO TRUCK CORPORATION**
**405 08 Göteborg (SE)**

(72) Inventors:
• **KUMRU, Murat**
**413 06 Gothenburg (SE)**

• **PANAHANDEH, Ghazaleh**
**414 67 Göteborg (SE)**
• **RYDSTRÖM, Mats**
**427 39 Billdal (SE)**

(74) Representative: **Ström & Gulliksson AB**
**P.O. Box 4188**
**203 13 Malmö (SE)**

Remarks:
Amended claims in accordance with Rule 137(2)
EPC.

(54) **ROBUST RADAR-BASED VEHICLE MOTION ESTIMATION**

(57) A computer-implemented method for determining a motion parameter of a vehicle (100, 900), the method comprising
configuring (S 1) at least one radar transceiver (180, 910) to emit a respective radar signal (185) towards a ground surface (101, 920) supporting the vehicle (100, 900),
receiving (S2) radar backscatter from the ground surface (101, 920), where the radar backscatter is indicative of a radial velocity of the ground surface relative to the radar transceiver (180, 910) in dependence of a range from the radar transceiver (180, 910) to the ground surface (101, 920),
determining (S3) an expected range-Doppler appearance (400, 600, 700, 800) of the radar backscatter from the ground surface (101, 920), based at least in part on an expected motion of the vehicle (100, 900) relative to the ground surface (101, 920),
obtaining (S4) a range-Doppler filter (410, 420) based on the expected range-Doppler appearance (400, 600, 700, 800) of the radar backscatter,
processing (SS) the received radar backscatter by the range-Doppler filter (410, 420), and determining (S6) the motion parameter of the vehicle (100, 900) based on the processed radar backscatter.

FIG. 4

EP 4 600 696 A1

**Description**

**TECHNICAL FIELD**

This disclosure relates generally to motion estimation and to motion control of vehicles such as heavy-duty trucks, semi-trailers, and construction equipment. In particular aspects, the disclosure relates to robust radar-based vehicle motion estimation. Other aspects of the disclosure relate to determining a signal quality metric associated with at least one radar transceiver of a vehicle, and to methods for detecting obstacles on a ground surface supporting a vehicle.

The disclosure can be applied to heavy-duty road vehicles such as trucks and buses, and also to construction equipment such as articulated haulers and wheel loaders, among other vehicle types. Many aspects of the disclosure are also applicable in passenger cars. Although the disclosure may be described with respect to a particular vehicle, the disclosure is not restricted to any particular vehicle.

**BACKGROUND**

Modern vehicles often comprise advanced motion control systems, such as advanced driver assistance (ADAS) and various levels of autonomous driving (AD) functionality. Such motion control systems rely on accurate information about the current motion of the vehicle, and also the future motion of the vehicle over some time window. Vehicle motion estimation and motion prediction are therefore important components in modern vehicle control systems.

US 2004/0138802 A1 discusses use of radar techniques for determining vehicle speed over ground. This technique provides accurate information about the motion of the vehicle relative to the ground surface.

WO2023169746 A1 also discusses use of radar techniques for determining vehicle speed over ground based on a radar transceiver system comprising radar transceivers directed at the surface supporting the vehicle.

However, despite the available techniques for determining vehicle motion, there is a continuing need for improved, more versatile, and more accurate methods for vehicle motion estimation and vehicle motion prediction, as well as for vehicle motion control.

**SUMMARY**

Aspects of the disclosure relate to a computer implemented method for determining a motion parameter of a vehicle such as a heavy-duty vehicle or a passenger car. The method comprises configuring at least one radar transceiver to emit a respective radar signal towards a ground surface supporting the vehicle and receiving radar backscatter from the ground surface, where the radar backscatter is indicative of a radial velocity of the ground surface relative to the radar transceiver in dependence of a range from the radar transceiver to the ground surface. The method also comprises determining an expected range-Doppler appearance of the radar backscatter from the ground surface, such as a curve or pattern in a range-Doppler map or the like, based at least in part on an expected motion of the vehicle relative to the ground surface. The method further comprises obtaining a range-Doppler filter based on the expected range-Doppler appearance of the radar backscatter, processing the received radar backscatter by the range-Doppler filter, and determining the motion parameter of the vehicle based on the processed radar backscatter. This way a more robust ground-speed radar system is obtained, which is able to filter out clutter and distortion from objects different from the ground surface supporting the vehicle. The vehicle motion parameter determined based on the processed radar backscatter becomes both more reliable and more accurate.

Aspects of the method also comprises controlling motion of the vehicle based on the determined motion parameter. This way various vehicle motion management functions become more reliable, leading to more efficient and safe motion control. According to examples, the method comprises determining the motion parameter as a parameter comprising any of vehicle unit speed, vehicle unit acceleration, vehicle unit pitch angle, vehicle unit roll angle, vehicle unit pitch motion, vehicle unit roll motion, vehicle unit yaw motion, and vehicle unit heave over the ground surface.

The vehicle can be an articulated vehicle, in which case the method may comprise determining the motion parameter separately for two or more vehicle units. It may, for instance, be advantageous to obtained motion parameters separately for the truck and for the trailer of a semi-trailer vehicle combination. The separate vehicle unit motion parameters can be used to improve the vehicle motion control of the combination.

Aspects of the methods disclosed herein may comprise determining the expected range-Doppler appearance of the radar backscatter from the ground surface at least in part from a nominal radar transceiver geometry, such as a known installation geometry of the radar system, and/or a known vehicle geometry. This data can be preconfigured in a vehicle. The nominal radar transceiver geometry can then be refined during run-time, by various calibration methods that will be discussed in more detail below.

The methods discussed herein may furthermore comprise determining the expected range-Doppler appearance of the radar backscatter from the ground surface at least in part from a predicted motion of the vehicle. Motion prediction methods are known in the art and will not be discussed at length herein. Given a current estimated vehicle motion state, it is possible to extrapolate this to a future vehicle motion state using, e.g., information about control input signals such as applied steering angle, wheel torque, and so on. Using this type of predicted motion can improve the accuracy of the expected range-Doppler appearance. The predicted motion of the vehicle can, e.g., be determined at least in part based on an inertial measurement unit (IMU) output signal which provides acceleration data.

Aspects of the methods disclosed herein may comprise determining the expected range-Doppler appearance of the radar backscatter from the ground surface at least in part from a predicted vehicle unit pitch angle and/or a predicted vehicle unit roll angle of the vehicle. The pitch angle and the roll angle of the vehicle has an effect on the expected range-Doppler appearance of the radar backscatter, as will be explained in the following. Thus, it may be advisable to account for these parameters when determining the expected range-Doppler appearance. Aspects of the methods disclosed herein may also comprise determining the expected range-Doppler appearance of the radar backscatter from the ground surface at least in part from previous range-Doppler appearances of received radar backscatter, and/or at least in part from data received from one or more other vehicles.

According to some examples, the methods disclosed herein also comprise obtaining the range-Doppler filter as a set of discrete weights indexed by range and Doppler of the received radar backscatter and/or a weighting function over range and Doppler. These weights can then be applied to range-Doppler data obtained from a radar system in order to, e.g., suppress distortion and noise in the received backscatter which could otherwise have a negative effect on the accuracy of the motion parameter estimation by the system. According to other aspects, the method comprises obtaining the range-Doppler filter as a boundary region which identifies a set of ranges and corresponding Doppler values to be used in determining the motion parameter of the vehicle. This boundary region can function as a gate which removes irrelevant portions of the range-Doppler domain from consideration when determining the motion parameter of the vehicle.

According to some preferred aspects, the method comprises obtaining the range-Doppler filter at least in part based on antenna characteristics of the at least one radar transceiver. By accounting for the antenna characteristics of the radar transceiver system, the accuracy and robustness of the overall system is improved, which is an advantage.

Aspects of the methods discussed herein may also comprise obtaining the range-Doppler filter at least in part based on an estimated error characteristic of the expected motion of the vehicle relative to the ground surface. This means that the filter is configured in dependence of how certain the estimate of vehicle motion is. A more certain motion then results in a narrower filter which suppresses more irrelevant data compared to when vehicle motion is less certain. It is an advantage to account for the estimated error characteristics of the expected motion of the vehicle relative to the ground surface in this manner since a more relevant filter is obtained which does not filter out important data, and at the same time suppresses unwanted distortion in the received radar backscatter.

Some aspects of the methods discussed herein may also comprise determining a signal quality metric for each of the at least one radar transceiver based on an energy of the received radar backscatter after processing by the range-Doppler filter. This signal quality metric can be used in higher layer functions, such as vehicle motion control functions and the like, to optimize performance.

The method may also comprise detecting one or more obstacles on the ground surface supporting the vehicle, at least in part by a comparison of the received radar backscatter before and after processing by the range-Doppler filter. This way a robust obstacle detection system is provided, which is an advantage.

Aspects of the present disclosure also relate to hardware devices such as control units, computer systems, and processing circuitry. Vehicles are also disclosed that are associated with the above-mentioned technical features and advantages.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

Figure 1 is an exemplary illustration of a heavy-duty vehicle with a radar system.

Figures 2A-B show example vehicles and define some radar system parameters.

Figure 3 exemplifies a surface area illuminated by a radar transceiver.

Figure 4 shows a graph which illustrates range-Doppler relationships.

Figures 5A-B illustrate effect of pitch on a ground-speed radar transceiver.

Figures 6A-D and 7 show graphs that illustrate various range-Doppler relationships.

Figure 8 illustrates an example range-Doppler power spectrum.

Figure 9 shows an example heavy-duty vehicle with a radar transceiver system.

Figure 10 schematically illustrates a signal processing system.

Figure 11 is a flow chart illustrating methods.

Figure 12 is a schematic diagram of an exemplary computer system for implementing examples disclosed herein.

## DETAILED DESCRIPTION

The detailed description set forth below provides information and examples of the disclosed technology with sufficient detail to enable those skilled in the art to practice the disclosure.

The techniques of the present disclosure will now be described more fully hereinafter with reference to the accompanying drawings, in which certain aspects of the invention are shown. This invention may, however, be embodied in many different forms and should not be construed as limited to the embodiments and aspects set forth herein; rather, these embodiments are provided by way of example so that this disclosure will be thorough and complete, and will fully convey the scope of the invention to those skilled in the art. Like numbers refer to like elements throughout the description.

It is to be understood that the present invention is not limited to the embodiments described herein and illustrated in the drawings; rather, the skilled person will recognize that many changes and modifications may be made within the scope of the appended claims. Hence, many if not most of the technical features discussed below are not inextricably linked to each other but can be used separately with advantage.

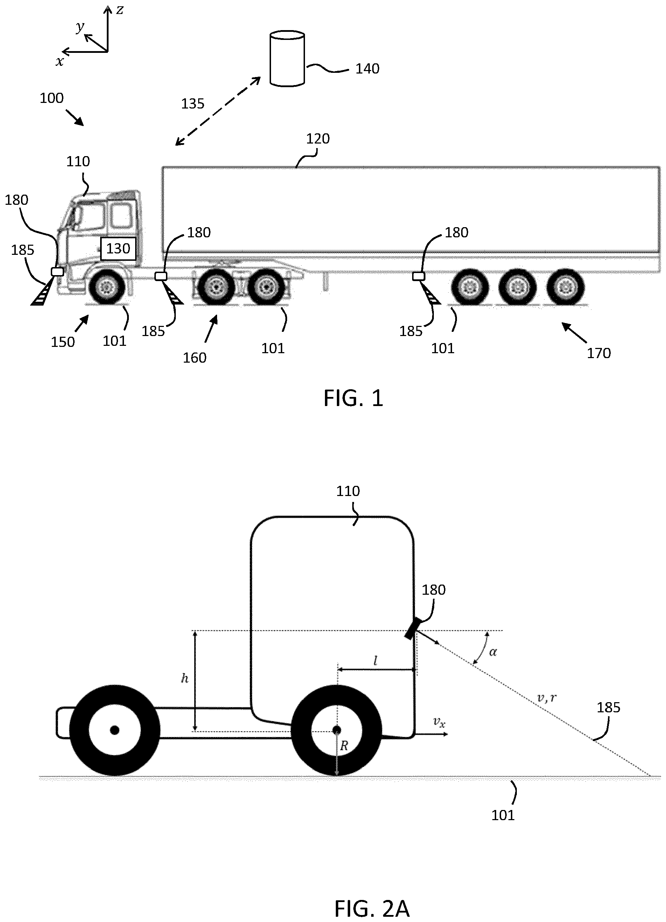

Figure 1 illustrates a heavy-duty vehicle 100. This particular example comprises a tractor unit 110 which is arranged to tow a trailer unit 120 in a known manner. The tractor 110 comprises a vehicle control unit (VCU) 130 arranged to control various functions of the vehicle 100. For instance, the VCU may be arranged to perform a vehicle motion management (VMM) function comprising control of wheel slip, vehicle unit stability, and so on. The trailer unit 120 optionally also comprises a VCU, which then controls one or more functions on the trailer 120. The VCU 130 on the tractor unit 110 may then be configured as primary unit and the VCU on the trailer may be at least in part controlled by the primary unit. The VCU or VCUs may be communicatively coupled, e.g., via wireless link 135, to a remote server 140. This remote server may be arranged to perform various VCU configurations, and to provide data to the VCU 130, such as data regarding the geometry of the vehicle and the characteristics of various sensor systems arranged on the tractor unit 110 and/or on the trailer 120.

The VCU or VCUs on the vehicle 100 comprise processing circuitry arranged to execute one or more functions. These functions will be described herein mainly as methods executed by processing circuitry on the VCU or VCUs. This processing circuitry may be centralized or distributed over more than one processing unit on the vehicle and/or at the remote server 140.

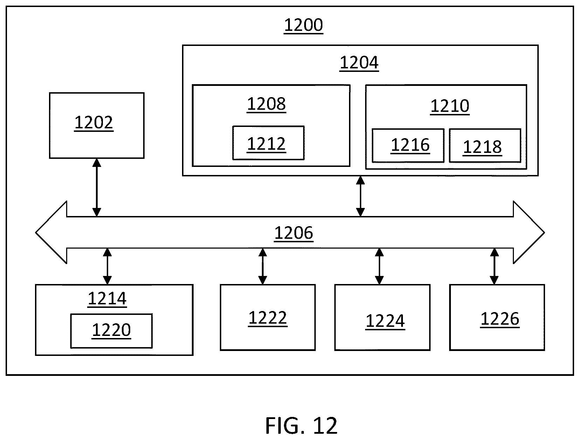

An example computer system 1200 that can be used to implement the methods discussed herein will be described in more detail below in connection to Figure 12.

A heavy-duty vehicle may be taken to mean a motor vehicle rated at more than 8,500 pounds Gross Vehicle Weight Rating (GVWR), which is about 3855 kg. A heavy-duty vehicle may also be taken to mean a motor vehicle that has a basic vehicle frontal area in excess of 45 square feet, which is about 4,2 $m^2$. Examples of heavy-duty vehicles include trucks, semi-trailers, and the like. It is appreciated that the herein disclosed methods and control units can be applied with advantage also in other types of heavy-duty vehicles, such as trucks with drawbar connections, construction equipment, buses, and the like.

The vehicle combination 100 may of course also comprise additional vehicle units, such as one or more dolly units and more than one trailer unit. The teachings herein can also be applied in rigid vehicles, such as rigid trucks and also in passenger cars.

The vehicle 100 is supported by wheels. The tractor unit 110 has front wheels 150 which are normally steered, and rear wheels 160 of which at least one pair are driven wheels. The trailer unit 120 is supported on trailer wheels 170. Trailers with driven wheels, and even one or more steered axles, are also possible. The wheels of the vehicle 100 support the vehicle on a surface 101, which can be a paved surface, a gravel surface, or some other surface.

The vehicle 100 is equipped with a radar sensor system comprising one or more radar transceivers 180 arranged to transmit respective radar signals 185 and to receive radar signal backscatter from the environment in vicinity of the radar transceiver, in particular from the surface 101 supporting the vehicle 100.

The radar sensor system transceivers 180 are directed at the surface 101 and can therefore be used to determine a speed over ground of the vehicle in a reliable manner. A ground speed radar module 180, 130 can be configured to determine a one dimensional velocity of the vehicle 100, such as the longitudinal velocity $v_x$ of the vehicle over the surface 101, a two-dimensional velocity vector $[v_x, v_y]$ or a three-dimensional velocity vector $[v_x, v_y, v_z]$ of a vehicle with respect to a surface supporting the vehicle, where the orientation of the x, y and z axes used in the present disclosure are indicated in Figure 1. The radar system on the vehicle can, generally, be used to determine one or more motion parameters of the vehicle such as vehicle unit speed ($v_x$, $v_y$, $v_z$), vehicle unit acceleration ($a_x$, $a_y$, $a_z$), vehicle unit pitch angle ($\varphi_y$), vehicle unit roll angle ($\varphi_x$), vehicle unit pitch motion ($\omega_y$), vehicle unit roll motion ($\omega_x$), and vehicle unit yaw motion ($\omega_z$). The radar system on the vehicle can also be used to determine vehicle unit heave, i.e., the vehicle unit height along the z-axis over the surface 101.

Many of the methods and functions discussed herein rely on data obtained from the one or more radar transceivers 180. The VCU or VCUs may be communicatively coupled to processing circuitry integrated with the radar transceivers 180. Some VCUs discussed herein may also comprise hardware for generating, transmitting and/or receiving radar signals. This disclosure is not limited to any particular VCU hardware architecture, nor any particular radar transceiver architecture.

The principle of determining motion parameters of the vehicle 100 using the radar transceivers 180 builds on the disclosure of, e.g., US 2004/0138802 and other known ground speed radar systems, such as the systems disclosed in WO2023169746 A1. Methods of varying complexity can be applied to determine vehicle motion parameters by analyzing radar backscatter from the surface supporting the vehicle. Such methods are known and will not be discussed in detail herein.

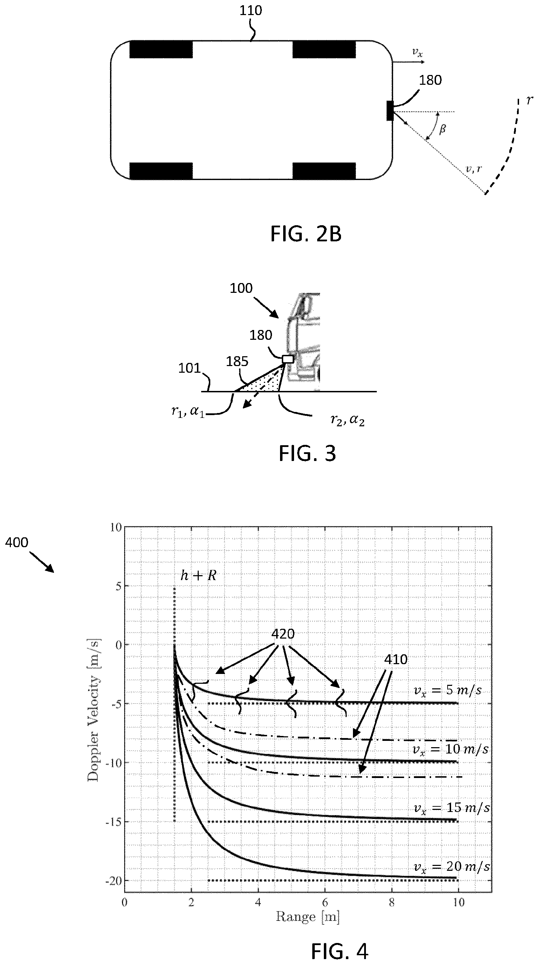

With reference to the somewhat simplified example in Figure 2, suppose that the truck 110 moves in its longitudinal direction along the x-axis, and let $v_x$ denote the longitudinal velocity with respect to the surface 101 along this axis. Let h and l define the position of the radar sensor 180 with respect to the vehicle body of front axle, as indicated in Figure 2. The wheel radius is denoted by R. The ground 101 moves at a radial velocity v relative to the radar transceiver 180. Radial velocity will often be referred to herein as the Doppler velocity, and the two terms can be used interchangeably.

The distance from the radar transceiver 180 to a point in the area on the surface illuminated by the radar transceiver is r. The radial velocity v and the range r, along an observation direction with an elevation angle $\alpha$ can be expressed as

$$v = -cos(\alpha)\, v_x \qquad (1)$$

$$r = \frac{1}{sin(\alpha)}(h + R) \qquad (2)$$

The observation direction may, e.g., be the boresight direction of the radar transceiver, i.e., the direction of maximum antenna gain in a single main lobe radar transceiver, or some other direction. It is noted that both of these observations are functions of the elevation angle $\alpha$, which can be regarded as an implicit variable considering that simple radar systems, such as ground speed radars, having a single receiver antenna cannot directly measure the direction of arrival of the received radar backscatter.

Figure 2B shows a top view of an example vehicle unit 110. In this case the radar beam is also angled laterally at an azimuth angle $\beta$ in addition to the elevation angle $\alpha$, while the range to the illuminated surface area is kept the same as indicated by the dashed line in Figure 2B. For an observation direction with an elevation angle $\alpha$ and an azimuth angle $\beta$, the range and radial velocities are given as

$$v = -cos(\alpha)\, cos(\beta)\, v_x \qquad (3)$$

$$r = \frac{1}{sin(\alpha)}(h + R) \qquad (4)$$

The radar transceiver 180 generally illuminates an area on the road surface and not a localized small point, since the radar beam is normally not a true laser-like or pencil-shaped beam. Thus, even single-beam radar transceivers simultaneously collect radar backscatter from different observation directions due to the spread of the main radar transmission lobe, i.e., due to the shape of the main lobe of the radar transceiver antenna including effects of, e.g., the radar front end on the overall transmission pattern of the radar transceiver. The extent of the spread depends mainly on the antenna characteristics of the radar transceiver but also the reflection properties of the environment and the vehicle components in the near-field of the radar transceiver. This means that there will be a spread in elevation angles in the transmitted radar signal, and also in the received radar backscatter, as illustrated in Figure 3, where an area of the road surface has been illuminated with varying degree of intensity, from some range $r_1$ at corresponding elevation angle $\alpha_1$ to a range $r_2$ at elevation angle $\alpha_2$. The bore sight direction of the radar transceiver 180 is indicated by the dashed line in Figure 3. The largest received radar backscatter power is most likely received from the boresight direction, at least on average. The average received signal power then declines with elevation angle from the elevation angle of the radar transceiver boresight direction in a known manner.

By letting $\alpha$ and/or $\beta$ vary over some predetermined span, such as between a small angle corresponding to a maximum range and an angle close to perpendicular to the surface 101, Doppler $v$ is obtained as function of range $r$, since each $\alpha$ and/or $\beta$ gives a tuple $(v, r)$. The equations (1-4) can thus be used to determine an expected range-Doppler appearance of received radar backscatter from the surface 101, given an expected or predicted vehicle motion and a radar transceiver geometry.

In essence, this means that a range-Doppler map of the received radar backscatter, i.e., a data set indicating the different ranges and radial velocities at which radar backscatter energy has been detected by the radar transceiver 180, will exhibit a curved banana-like shape as illustrated by the example range-Doppler map 400 in Figure 4, where expected range-Doppler appearances of received radar backscatter has been plotted for different vehicle longitudinal velocities $v_x$. The parameters of the example radar system in Figure 4 are set as $h = 1.0$ m, $R = 0.5$ m, $l = 1$ m, the range $r$ is restricted to be

$$\alpha > \frac{\pi}{2}$$

smaller than 10 m. The radar is not able to observe the ground for the elevation angles $\alpha > \frac{\pi}{2}$ as the vehicle body obstructs the field of view. Note that the banana-like curves in Figure 4 all start at a range corresponding to the height of the radar transceiver over ground which corresponds to a direction more or less perpendicular to the ground, where radial (Doppler) velocity is close to zero as expected. The curves all converge to the longitudinal velocity of the vehicle 100, which happens as the azimuth angle (and thus also the distance $r$) becomes large, at least when $\alpha$ and $\beta$ are small.

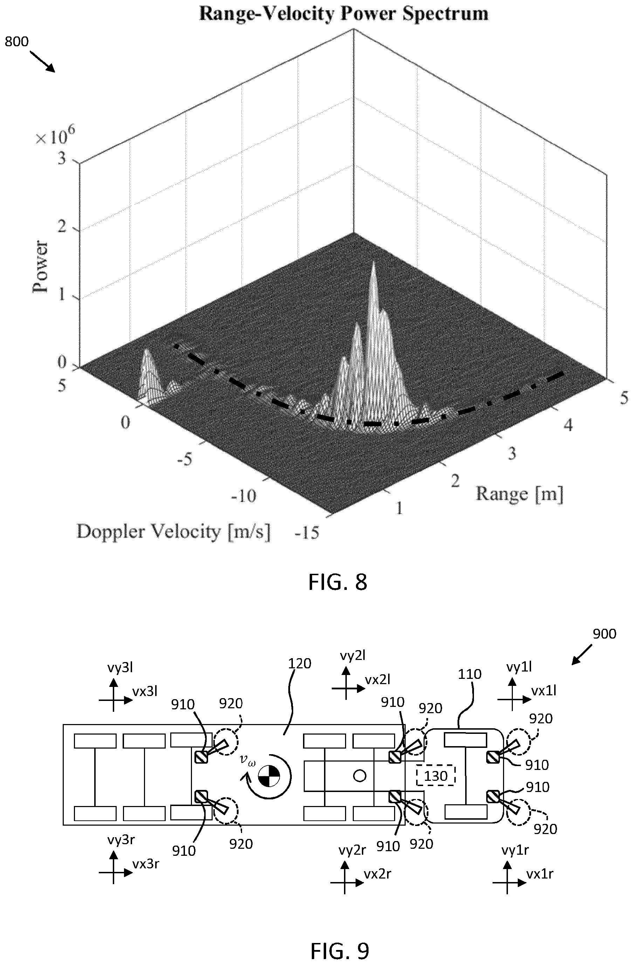

An example range-Doppler power spectrum 800 from a real-world radar transceiver is illustrated in Figure 8, where the expected range-Doppler appearance is indicated by a dash-dotted line. Here the impact from the antenna diagram can be more clearly seen as a variation in received radar backscatter power. The antenna boresight direction is in this case somewhere close to the peak of the power of the received backscatter. The artefact at zero range and zero Doppler is most likely due to near-field effects, i.e., objects close to the antenna. This power spectrum is likely to vary over time since it is impacted by the radar reflection properties of the surface and also at least to some extent by the radar transceiver front end.

To summarize, with continued reference to Figure 4, it has been realized that the characteristic behavior of ground surface radar backscatter as function of radar system geometry and vehicle motion can be leveraged in order to provide improved vehicle motion estimation, i.e., to improve the determination of one or more motion parameters on a vehicle, and also to determine or refine data related to radar system geometry on a vehicle, such as the height over ground of the radar transceiver, or its boresight angle relative to the surface supporting the vehicle. Having some idea of the current motion of a vehicle, such as its approximate longitudinal velocity, and the geometry of the radar system arranged on the vehicle, an expected range-Doppler appearance of the received backscatter from a given radar transceiver can be determined. This expected range-Doppler appearance can then be used to define a filter that can be applied to the received backscatter from the radar transceiver.

The expected range-Doppler appearance can be determined analytically, e.g., by varying $\alpha$ and $\beta$ in equation (3) and (4) above to get pairs of range and radial velocities which constitute the expected range-Doppler appearance. There are, however, also other ways to determine the expected range-Doppler appearance given a certain vehicle motion over the surface supporting the vehicle. One such method is an experimental method where the vehicle is moved over the surface at a known motion state (known velocity etc.) and the range-Doppler appearance is recorded a few times, averaged, and then stored in a database indexed by vehicle motion state. This database can then be consulted if an expected range-Doppler appearance for a given motion state is wanted.

An expected range-Doppler appearance can, according to the teachings herein, be formatted in different ways. According to one example the expected range-Doppler appearance is formatted as a curve in the range-Doppler plane, i.e., as a function $v = f(r)$. According to another example the expected range-Doppler appearance is a discrete set of magnitudes indexed by range $r$ and by velocity $v$, i.e., similar to a fast Fourier transform based discrete range-Doppler map obtained from a radar transceiver. According to yet another example the expected range-Doppler appearance is a continuous three-dimensional function which indicates expected power (possibly with phase) over range $r$ and velocity $v$.

The expected range-Doppler appearance can be used by the one or more VCUs 130 on the vehicle 100 to define one or more range-Doppler filters and signal processing functions that can be applied to the range-Doppler data obtained from the one or more radar transceivers 180. Suppose that the range-Doppler data set is indexed by range $r$ and by radial velocity $v$, such that $P_{r,d}$ is the received signal power in the radar backscatter corresponding to a range $r$ and a radial velocity $v$. The power $P_{r,d}$ may be just a magnitude or an amplitude with corresponding relative phase value.

Figure 4 illustrates a first example filter 410 applied to the $v_x = 10 m/s$ curve. This filter is a gating filter which will suppress all signal energy outside of the dash-dotted lines. This, interference from foreign objects on the road surface such as water spray, mud, snow, or obstacles on the road surface will be suppressed and thus not distort the estimation of vehicle speed over ground. The gating filter can, for instance, be defined as a region around the expected range-Doppler appearance defined by offsetting the expected range-Doppler appearance curve by a predetermined amount in the Doppler-direction.

Suppose for instance that $P_{r,d}$ is the received signal power in the radar backscatter corresponding to a range $r$ and a radial velocity $v$ in some radar system. The gating function will then zero out all received radar backscatter power if the coordinate in the range-Doppler map, i.e., $(v, r)$ lies outside of the gating region, leaving only the received radar backscatter power at coordinates in the range-Doppler map that lie inside of the gating region.

This type of gating filter can be used to pre-process that radar data obtained from the radar transceivers in, e.g., US 2004/0138802 A1 and/or in WO2023169746 A1, and also in the other ground-speed radar system known in the art.

Figure 4 also illustrates a second example filter 420. This filter is instead a weighting filter that applies larger weights to received radar backscatter power close to the expected appearance of the road surface, i.e., close to the banana-like curve, and smaller weights to received radar backscatter further away from the expected appearance. This will again emphasize radar backscatter that has likely resulted from reflection at the road surface and suppress of radar backscatter which may otherwise distort the estimation of vehicle motion relative to the road surface. The weights can, for instance, be determined function that declines in a direction perpendicular to the expected range-Doppler appearance curve. The decline may, e.g., be according to a second-order expression, a sine function, or an exponential decline. The decline in the weight function may also be linear.

Suppose again that $P_{r,d}$ is the received signal power in the radar backscatter corresponding to a range $r$ and a radial velocity $v$ in some radar system. The weighting function will then apply large magnitude weights to all received radar backscatter power at coordinates $(v, r)$ close (in Euclidean distance or by some other distance metric) to the expected range-Doppler appearance curve, and smaller weights to received radar backscatter power at coordinates $(v, r)$ further away from the expected range-Doppler appearance curve.

This type of weighting filter can be used to pre-process that radar data obtained from the radar transceivers in, e.g., US 2004/0138802 A1 and/or in WO2023169746 A1, and also in the other ground-speed radar system known in the art.

The expected range-Doppler appearance is, generally, a function $f_{G,M}(r,v)$ that is parameterized by the radar system geometry $G$ and the current vehicle motion $M$ (such as the position of the radar transceiver on the vehicle and the speed of the vehicle over the surface 101). Given a radar system geometry $G$ and a current vehicle motion $M$, it is possible to plot what the radar backscatter is expected to look like in the range-Doppler domain. The expected range-Doppler appearance function $f_{G,M}(r,v)$ can be given in magnitude only, or in amplitude and phase, just like any range-Doppler map.

According to a first example application, the expected range-Doppler appearance function $f_{G,M}(r,v)$ can be used to define a weighting function which emphasizes backscatter power $P_{r,d}$ where backscatter power is expected according to the function $f_{G,M}(r,v)$, while suppressing backscatter power at other parts in the range-Doppler map. In other words, received radar backscatter power at index $(r, d)$ from the radar transceiver 180 can be processed as

$$P_{r,d}{}^{proc} = w(r,d)P_{r,d}$$

where $w(r, d)$ is a weight determined from the magnitude of the function $f_{G,M}(r,v)$. In case the weights are binary (either zero or one), the filter will be a gating filter which rejects radar backscatter power too far from the expected range-Doppler appearance curve. The weights $w(r, d)$ are preferably also configured so as to account for uncertainty in the radar system geometry $G$ and/or in the current vehicle motion $M$. The more accurate the information on $G$ and $M$ the steeper the weights can decline from the most likely expected radar backscatter curve, and vice versa. In case of large uncertainty in the radar system geometry $G$ and/or in the current vehicle motion $M$ a set of uniform weights may be used, which will not result in any suppression of radar backscatter power in the range-Doppler map.

It is also possible to formulate an estimator $\hat{G}$ of radar system geometry $G$ and/or an estimator $\hat{M}$ of the current vehicle motion $M$ as, e.g.,

$$\hat{G} = arg\, min_{G|M}\, O\left(P_{r,v}, f_{G,M}(r,v)\right)$$

$$\hat{M} = arg\ min_{M|G}\ O\left(P_{r,v}, f_{G,M}(r,v)\right)$$

where $O(\cdot)$ is an objective function formulated based on the received radar signal backscatter power $P_{r,v}$ at different ranges $r$ and different radial velocities $v$ and the expected range-Doppler appearance function $f_{G,M}(r,v)$ that is parameterized by $G$ and/or by $M$. The notation $G|M$ means that the objective function is parameterized by $G$ conditioned on a known or assumed value of $M$. The objective function $O(\cdot)$ can be formulated using techniques known in the art, such as maximum likelihood objective functions, maximum a-posteriori objective functions, least-squares objective functions, and the like.

The estimators $\hat{G}$ and $\hat{M}$ are both constructed on the basic principle, which comprises observing radar backscatter from the surface 101 in the range-Doppler domain, and then finding the set of system parameters $G$ and/or $M$ which gives an expected range-Doppler appearance function $f_{G,M}(r,v)$ that best matches the observed radar backscatter.

As a straight-forward example of the above, suppose that the radar system geometry is perfectly known, i.e., that $G$ is known from accurate measurements and/or from calibration of the radar transceiver system installation, and that it is desired to determine one or more vehicle motion parameters comprised in $M$, such as vehicle speed. An objective function $O(P_{r,v}, f_{G,M}(r,v))$ can then be formulated based on some definition of distance between the detected radar backscatter power $P_{r,v}$ and the expected radar backscatter power for a given motion $M$. This objective function can then be minimized by finding the set of motion parameters $M$ that result in an expected range-Doppler appearance that agrees with the detected radar backscatter power $P_{r,v}$, according to some cost metric such as Euclidean distance, squared Euclidean distance, or the like. More advanced objective function may be formulated by assuming a statistical distribution of the different error sources involved in the process.

According to another straight-forward example, a set of functions similar to basis functions can be defined by assuming different vehicle motion parameters in some range, and with some resolution. The different motion parameter assumptions can be used together with an estimated or a-priori known radar system geometry $G$ to define expected range-Doppler appearance functions $f_{G,M_i}(r,v)$, $i = 1, 2,..., N$. A detected radar backscatter power $P_{r,v}$ can then be correlated with the different expected range-Doppler appearance functions $f_{G,M_i}(r,v)$, and the case with strongest correlation can be identified.

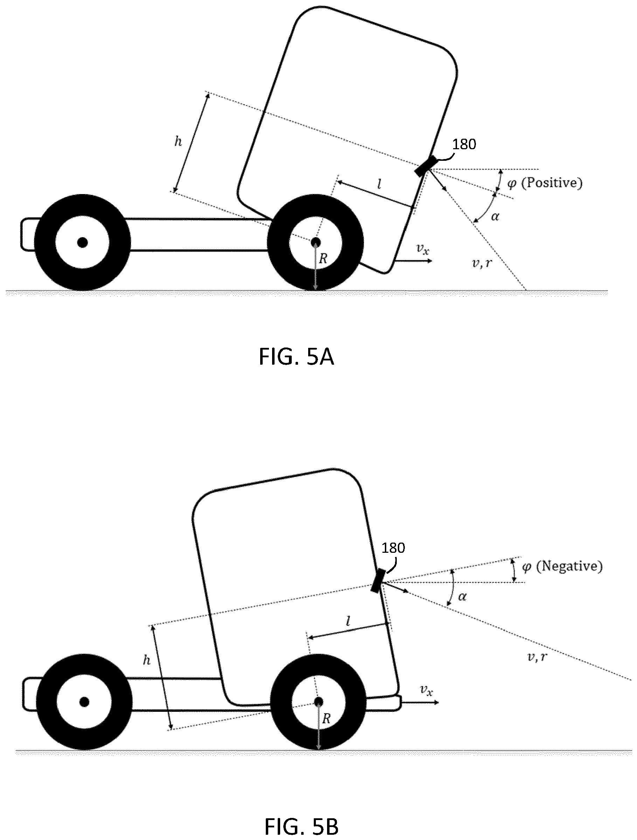

The assumption of zero pitch angle can of course be dropped and the problem can instead be formulated for an arbitrary pitch angle as shown in Figures 5A-B. In this case, we can express the range and Doppler velocity measurements as

$$v = -\cos(\alpha + \varphi)\,v_x\,, \qquad\qquad (5)$$

$$r = \frac{1}{\sin(\alpha + \varphi)}\left(\cos(\varphi)\,h\,-\sin(\varphi)\,l + R\right), \qquad\qquad (6)$$

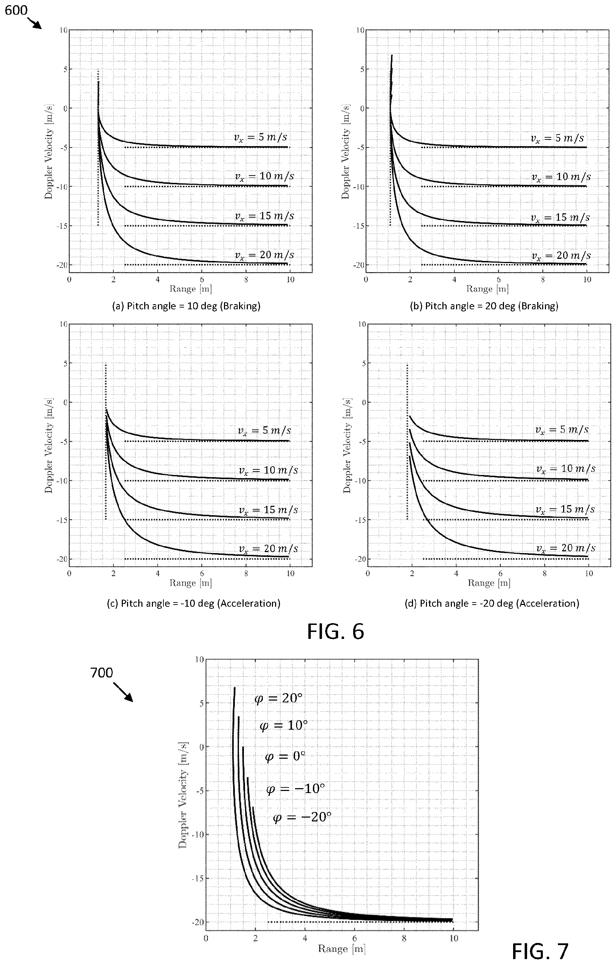

where $\varphi$ represents the pitch angle of the body with respect to the road surface. For the given setting, the range-velocity curves for some examples with various longitudinal velocities and pitch angles are illustrated in Figures 6A-D. Figure 7 compares the $v_x = 20m/s$ examples from Figures 6A-D.

It is appreciated that the techniques disclosed herein can be used to determine vehicle pitch. This can be realized, e.g., by investigating what the left-most part of the range-Doppler maps look like and estimate the current vehicle pitch as a pitch which gives an expected range-Doppler appearance that agrees with the detected radar backscatter power. A correlation between expected range-Doppler appearance and detected radar backscatter can be used to identify current vehicle pitch.

The techniques disclosed herein can be applied to vehicles comprising a single vehicle unit, and to vehicles comprising more than one vehicle unit, such as an articulated vehicle. The techniques can be applied in radar systems comprising just a single radar transceiver and in radar systems comprising a plurality of radar transceiver, perhaps mounted on different vehicle units as illustrated in Figure 9 which will be discussed in more detail.

To summarize, the present disclosure relates generally to computer-implemented methods and corresponding processing circuitry suitable for determining a motion parameter of a vehicle 100, 900. The motion parameter that is determined often comprises speed over ground $v_x$ of the vehicle, but other motion parameters can also be determined in this manner, as will be discussed in more detail in the following.

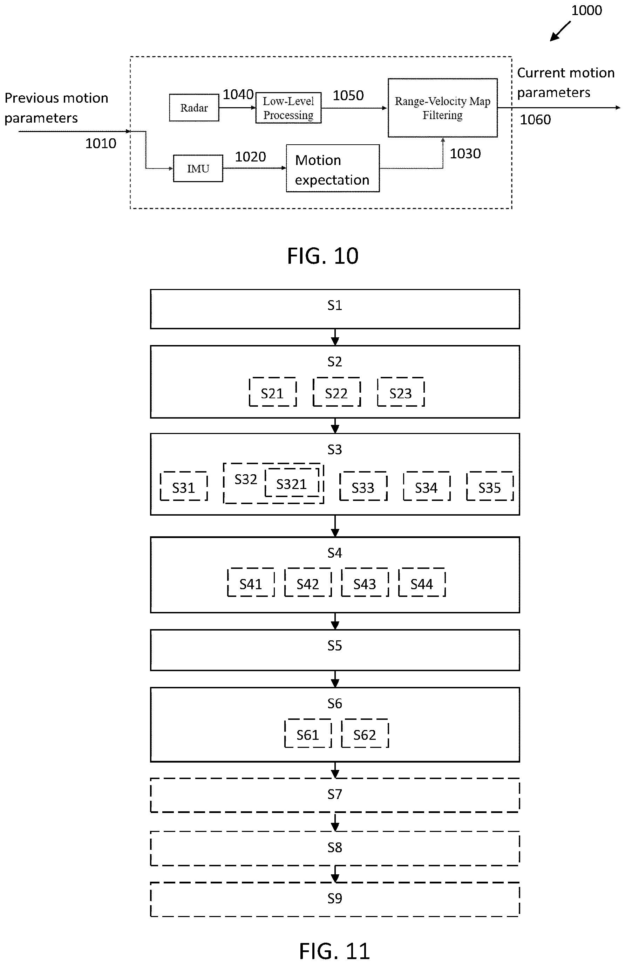

Figure 11 shows a flow chart that summarizes some of the teachings herein as methods. It is appreciated that the methods can be implemented in a computer system to be executed by processing circuitry, e.g., on a vehicle control unit 130. With reference to the flow chart in Figure 11, the methods disclosed herein comprise configuring S1 at least one radar transceiver 180, 910 to emit a respective radar signal 185 towards a ground surface 101, 920 supporting the vehicle 100, 900. The ground surface may be a normal road surface, such as a paved surface, but can also be a gravel surface or mud surface at a construction site, or a less even forest road. The surface 101 does not have to be perfectly planar in order for the techniques disclosed herein to be effective.

The method comprises receiving S2 radar backscatter from the ground surface 101, 920. The radar backscatter is as discussed above indicative of a radial velocity of the ground surface relative to the radar transceiver 180, 910. Since the radar transceiver illuminates an area of the ground surface, there will be a spectrum of ranges that are illuminated, normally with different intensity due to the antenna pattern of the radar transceiver. Due to the different illumination angles, a corresponding spectrum of radial velocities will be observed in the radar backscatter in dependence of the range from the radar transceiver 180, 910 to the ground surface 101, 920.

It is possible to determine S3 an expected range-Doppler appearance 400, 600, 700, 800 of the radar backscatter from the ground surface 101, 920, based at least in part on an expected motion of the vehicle 100, 900 relative to the ground surface 101, 920. The expected range-Doppler appearance can for instance be predicted based, e.g., on the radar transceiver geometry as discussed above, and also using other techniques such as monitoring detected radar backscatter over time and comparing to estimated or known vehicle motion states. The expected range-Doppler appearance of the radar backscatter can be seen as a model of the radar backscatter which can be used to predict what the backscatter will look like.

The method also comprises obtaining S4 a range-Doppler filter 410, 420 based on the expected range-Doppler appearance 400, 600, 700, 800 of the radar backscatter, which can be used to process S5 the received radar backscatter in various ways as will be discussed in more detail below, such that the motion parameter of the vehicle can be determined S6 in a better way.

The methods disclosed herein may target improved determination of motion parameters only. In this case the method may just result in an update of one or more motion parameters in memory that are then used by some other methods or control units to perform an action such as vehicle motion control. However, according to some aspects the method also comprises controlling S7 the actual motion of the vehicle 100, 900 based on the determined motion parameter. This motion control may, e.g., comprise control of the speed of the vehicle based on some desired speed, control of wheel slip using additional information related to the rotation speed of one or more wheels obtained from a wheel speed sensor, control of vehicle yaw rate, and the like.

Some of the computer-implemented methods disclosed herein comprise determining S61 the motion parameter as a parameter comprising any of vehicle unit speed $v_x$, $v_y$, $v_z$, vehicle unit acceleration $a_x$, $a_y$, $a_z$, vehicle unit pitch angle $\varphi_y$, vehicle unit roll angle $\varphi_x$, vehicle unit pitch motion $\omega_y$, vehicle unit roll motion $\omega_x$, and vehicle unit yaw motion $\omega_z$. These different motion parameters are important in many vehicle motion management functions, such as vehicle stability control.

The vehicle may be a single unit vehicle such as a passenger car or a rigid truck, or a multi-unit vehicle such as a rigid truck with a trailer or a semi-trailer vehicle. Figure 9 for instance shows an example heavy-duty vehicle 900 where a plurality of radar transceivers 910 have been mounted in connection to respective wheels or groups of wheels on the vehicle. On this example vehicle every group of wheels, i.e., front steered wheels, rear tractor wheels, and trailer wheels, are associated with radar transceivers on the right side and left side of the vehicle. Each such radar transceiver monitors the radar backscatter from an area of road surface 920 in front of the respective wheel or group of wheels, as illustrated in Figure 9.

In case of an articulated vehicle the method may comprise determining S62 the motion parameter separately for two or more vehicle units. In this case several radar transceivers 910 can be arranged on the different vehicle units 110, 120 as illustrated in Figure 9, in order to illuminate different areas 920 of the ground surface 101. The VCU or VCUs can then jointly process the radar backscatter according to the techniques disclosed herein to determine the one or more vehicle motion parameters in a robust and accurate manner, which is less sensitive to disturbance from objects not forming a part of the surface supporting the vehicle.

The expected range-Doppler appearance 400, 600, 700, 800 of the radar backscatter from the ground surface 101, 920, i.e., the predicted shape of the banana-like curve, can be determined in a few different ways.

The most basic example of determining the expected range-Doppler appearance 400, 600, 700, 800 of the radar backscatter from the ground surface 101, 920 is to perhaps use the geometry of the radar transceiver installation on the vehicle, as exemplified above in connection to Figures 2A-B. This way a predicted speed of the vehicle can be translated into the expected range-Doppler appearance using mathematical relationships between illumination angle range and radial velocity. In other words, the methods disclosed herein may comprise determining S31 the expected range-Doppler appearance 400, 600, 700, 800 of the radar backscatter from the ground surface 101, 920 at least in part from a nominal radar transceiver geometry. The speed of the vehicle 100 may, e.g., be given from a previous estimate of vehicle speed, perhaps with some extrapolation based on a current acceleration of the vehicle.

In some cases, the vehicle comprises one or more inertial measurement units (IMU). IMUs can be used with advantage to improve the processing of radar backscatter. Figure 10 shows an example 1000 of a radar signal processing system that is based on a combination of IMU and radar. The system uses a previous estimate of vehicle motion parameters as input to the IMU. The previous motion parameters may, e.g., comprise speed, acceleration, yaw motion, and the like. The IMU is then used to obtain information related to a current acceleration motion by the vehicle, and/or a current rotation motion by the vehicle. By formulating suitable motion equations, the previous motion parameters (such as the vehicle speed) can be combined with the data obtained from the IMU into an estimate of the expected motion by the vehicle relative to the surface 101.

The radar system, after low-level processing, outputs a data set 1050 corresponding to the range-Doppler maps discussed above. This data set is the processed using the expected motion 1030 of the vehicle according to the techniques disclosed herein. Thus, the methods disclosed herein may comprise determining S32 the expected range-Doppler appearance 400, 600, 700, 800 of the radar backscatter from the ground surface 101, 920 at least in part from a predicted motion of the vehicle 100, 900, where the predicted motion of the vehicle can be determined S321 at least in part based on an IMU output signal 1020.

Some aspects of the methods disclosed herein may also comprise determining S33 the expected range-Doppler appearance 400, 600, 700, 800 of the radar backscatter from the ground surface 101, 920 at least in part from a predicted vehicle unit pitch angle $\varphi_y$ and/or a predicted vehicle unit roll angle $\varphi_x$ of the vehicle 100, 900, as was discussed above in connection to Figures 5A-B, and illustrated in the example graphs 600, 700.

There are also other ways to determine the expected range-Doppler appearance 400, 600, 700, 800 of the radar backscatter from the ground surface 101, 920. One such alternative way is to simply monitor the received backscatter and compare it to motion parameters values that have been determined using other systems. For instance, some vehicles comprise wheel speed sensors that can be used to determine vehicle longitudinal speed over ground in a reliable manner, as long as the wheel radius $R$ is known and the wheels are not slipping. A free-rolling wheel (where no propulsion or braking torque is applied) can be used to determine vehicle longitudinal speed, and this speed can then be stored together with the range-Doppler appearance of the radar backscatter in a database. This database, once sufficiently populated, can then be consulted by the VCU in order to determine the expected range-Doppler appearance for a given vehicle velocity. Generally, improved performance of the techniques discussed herein can be obtained by determining S34 the expected range-Doppler appearance 400, 600, 700, 800 of the radar backscatter from the ground surface 101, 920 at least in part from previous range-Doppler appearances of received radar backscatter. This method of determining the expected range-Doppler appearance can of course be combined with the analytical approach discussed above, or any other approach. The expected range-Doppler appearances determined in different ways can be merged together, possibly by accounting for reliability.

According to some aspects, the method also comprises determining S35 the expected range-Doppler appearance 400, 600, 700, 800 of the radar backscatter from the ground surface 101, 920 at least in part from data received from one or more other vehicles. Thus, it is appreciated that the expected appearance database can be shared between vehicles, and also at least in part be pre-stored in a memory module of the vehicle. The data related to expected range-Doppler appearance can, for instance, be shared using the wireless link 135 and the server 140 discussed above in connection to Figure 1.

The actual range-Doppler filter used as part of the method may also be obtained in various ways and may take on various forms.

According to one example, the method comprises obtaining S41 the range-Doppler filter as a set of discrete weights 410 indexed by range and Doppler of the received radar backscatter and/or a weighting function over range and Doppler. These discrete weights or the weighting function, can be used to suppress radar backscatter that is more distant from the expected range-Doppler appearance, and emphasize the radar backscatter that is more in line with the expected range-Doppler appearance. This way distortion from objects not forming part of the ground surface 101 can be suppressed in an efficient manner.

According to another example, the method comprises obtaining S42 the range-Doppler filter as a boundary region 420 which identifies a set of ranges and corresponding Doppler values to be used in determining the motion parameter of the vehicle 100, 900. The range-Doppler filter then functions as a gate, which discards any range-Doppler energy in the received radar backscatter which does not fall inside the gated region of interest.

The range-Doppler filter 410, 420 may also at least in part be obtained S43 based on antenna characteristics of the at least one radar transceiver 180, 910. The antenna characteristics can be used to add more weight to radar backscatter in the region of the range-Doppler map that corresponds to the boresight direction of the radar transceiver, i.e., the part on the banana-like curve where the most signal energy is expected to be seen, and less weight on other parts of the range-Doppler map where not so much backscatter energy is expected.

According to other aspects, the method comprises obtaining S44 the range-Doppler filter 410, 420 at least in part based on an estimated error characteristic of the expected motion of the vehicle 100, 900 relative to the ground surface 101, 920. An error in the expected motion translates into an uncertainty in the expected range-Doppler appearance. An error in the speed of the vehicle over the surface 101 will, for instance, give rise to an error in the predicted convergence level, as can be seen from the example 400 in Figure 4. Likewise, an error in predicted vehicle pitch angle will result in an error in the left-most part of the banana-like curves as can be seen from the example 700 in Figure 7.

A variance or other measure of error characteristics in the motion state estimate of the vehicle that is used to determine the expected range-Doppler appearance can be used to define the range-Doppler filter, such that a larger

**EP 4 600 696 A1**

estimated error characteristic of the expected motion of the vehicle 100, 900 relative to the ground surface 101, 920 results in a wider filter compared to a smaller estimated error characteristic of the expected motion of the vehicle 100, 900.

It is also appreciated that the techniques disclosed herein can be used to determine if strong or weak radar backscatter is received from the road surface. Strong radar backscatter from the road surface is normally indicative of better performance by the ground-speed radar system compared to less strong backscatter. In the extreme, one or more radar transceivers have been blocked by some objects, such that their view of the road surface is obstructed, in which case the radar backscatter will no longer carry information related to the motion of the vehicle relative to the surface 101. According to some aspects, the method comprises determining S8 a signal quality metric for each of the at least one radar transceiver based on an energy of the received radar backscatter after processing by the range-Doppler filter 410, 420. The signal quality metric can be used to indicate a reliability of the determined motion parameter to other functions in the vehicle motion management system of the vehicle.

The signal quality metric can, for instance, be used in a vehicle motion estimation system that comprises more than one sensor type. The system may, for instance, comprise both cameras, radars, lidars, and IMUs. By monitoring the signal quality metric determined in this manner using the range-Doppler filter, a sensor fusion system can apply a suitable weight to give the data from the ground-speed radar system more or less weight, in dependence of its current reliability.

The signal quality metric determined in this manner can also be used to trigger a situation avoidance maneuver (SAM), such as an emergency braking maneuver, in case the signal quality metric fails to satisfy a predetermined acceptance criterion. If this happens the radar system may not be reliable enough to perform vehicle motion control based on the data from the radar system, since the motion parameters determined based on the radar backscatter may be inaccurate.

The filter techniques disclosed herein can furthermore be used to detect objects for forming part of the road surface, such as obstacles on the road surface. One such example are vulnerable road users located close to the vehicle. These objects will give rise to radar signal energy that is distanced from the expected range-Doppler appearance, i.e., located at some other place than the banana-like curve in the range-Doppler map. Consequently, the methods disclosed herein may comprise detecting S9 one or more obstacles on the ground surface 101, 920 supporting the vehicle 100, 900, at least in part by a comparison of the received radar backscatter before and after processing by the range-Doppler filter 410, 420.

In essence, object detection can be performed by analyzing parts of the range-Doppler map that are separated from the expected range-Doppler appearance, since these regions are not associated with the surface supporting the vehicle. In case the radar backscatter indicates significant energy somewhere in the range-Doppler map which is not close to the expected range-Doppler appearance, then this energy may be due to an obstacle on the surface, or in the air above the surface. The relative speed and range to this object can then be determined and, e.g., reported to an obstacle avoidance function of the vehicle. An alarm signal or emergency brake operation can also be triggered in the event that an obstacle is detected in this manner.

Figure 12 is a schematic diagram of a computer system 1200 for implementing examples disclosed herein. The computer system 1200 is adapted to execute instructions from a computer-readable medium to perform these and/or any of the functions or processing described herein. The computer system 1200 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1200 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit, or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1200 may comprise at least one computing device or electronic device capable of including firmware, hardware, and/or executing software instructions to implement the functionality described herein. The computer system 1200 may include processing circuitry 1202 (e.g., processing circuitry including one or more processor devices or control units), a memory 1204, and a system bus 1206. The computer system 1200 may include at least one computing device having the processing circuitry 1202. The system bus 1206 provides an interface for system components including, but not limited to, the memory 1204 and the processing circuitry 1202. The processing circuitry 1202 may include any number of hardware components for conducting data or signal processing or for executing computer code stored in memory 1204. The processing circuitry 1202 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1202 may further include computer executable code that controls operation of the programmable device.

The system bus 1206 may be any of several types of bus structures that may further interconnect to a memory bus (with or without a memory controller), a peripheral bus, and/or a local bus using any of a variety of bus architectures. The memory 1204 may be one or more devices for storing data and/or computer code for completing or facilitating methods described herein. The memory 1204 may include database components, object code components, script components, or other types of information structure for supporting the various activities herein. Any distributed or local memory device may be utilized with the systems and methods of this description. The memory 1204 may be communicably connected to the processing circuitry 1202 (e.g., via a circuit or any other wired, wireless, or network connection) and may include computer code for executing one or more processes described herein. The memory 1204 may include non-volatile memory 1208 (e.g., read-only memory (ROM), erasable programmable read-only memory (EPROM), electrically erasable programmable read-only memory (EEPROM), etc.), and volatile memory 1210 (e.g., random-access memory (RAM)), or any other medium which can be used to carry or store desired program code in the form of machine-executable instructions or data structures, and which can be accessed by a computer or other machine with processing circuitry 1202. A basic input/output system (BIOS) 1212 may be stored in the non-volatile memory 1208 and can include the basic routines that help to transfer information between elements within the computer system 1200.

The computer system 1200 may further include or be coupled to a non-transitory computer-readable storage medium such as the storage device 1214, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1214 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1214 and/or in the volatile memory 1210, which may include an operating system 1216 and/or one or more program modules 1218. All or a portion of the examples disclosed herein may be implemented as a computer program 1220 stored on a transitory or non-transitory computer-usable or computer-readable storage medium (e.g., single medium or multiple media), such as the storage device 1214, which includes complex programming instructions (e.g., complex computer-readable program code) to cause the processing circuitry 1202 to carry out actions described herein. Thus, the computer-readable program code of the computer program 1220 can comprise software instructions for implementing the functionality of the examples described herein when executed by the processing circuitry 1202. In some examples, the storage device 1214 may be a computer program product (e.g., readable storage medium) storing the computer program 1220 thereon, where at least a portion of a computer program 1220 may be loadable (e.g., into a processor) for implementing the functionality of the examples described herein when executed by the processing circuitry 1202. The processing circuitry 1202 may serve as a controller or control system for the computer system 1200 that is to implement the functionality described herein.

The computer system 1200 may include an input device interface 1222 configured to receive input and selections to be communicated to the computer system 1200 when executing instructions, such as from a keyboard, mouse, touch-sensitive surface, etc. Such input devices may be connected to the processing circuitry 1202 through the input device interface 1222 coupled to the system bus 1206 but can be connected through other interfaces, such as a parallel port, an Institute of Electrical and Electronic Engineers (IEEE) 13124 serial port, a Universal Serial Bus (USB) port, an IR interface, and the like. The computer system 1200 may include an output device interface 1224 configured to forward output, such as to a display, a video display unit (e.g., a liquid crystal display (LCD) or a cathode ray tube (CRT)). The computer system 1200 may include a communications interface 1226 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer-implemented method for determining a motion parameter of a vehicle (100, 900), the method comprising

   configuring (S1) at least one radar transceiver (180, 910) to emit a respective radar signal (185) towards a ground surface (101, 920) supporting the vehicle (100, 900),
   receiving (S2) radar backscatter from the ground surface (101, 920), where the radar backscatter is indicative of a radial velocity of the ground surface relative to the radar transceiver (180, 910) in dependence of a range from the radar transceiver (180, 910) to the ground surface (101, 920),
   determining (S3) an expected range-Doppler appearance (400, 600, 700, 800) of the radar backscatter from the ground surface (101, 920), based at least in part on an expected motion of the vehicle (100, 900) relative to the ground surface (101, 920),
   obtaining (S4) a range-Doppler filter (410, 420) based on the expected range-Doppler appearance (400, 600, 700, 800) of the radar backscatter,
   processing (S5) the received radar backscatter by the range-Doppler filter (410, 420), and determining (S6) the motion parameter of the vehicle (100, 900) based on the processed radar backscatter.

2. The computer-implemented method according to claim 1, further comprising controlling (S7) motion of the vehicle (100, 900) based on the determined motion parameter.

3. The computer-implemented method according to claim 1 or 2, comprising determining (S61) the motion parameter as a parameter comprising any of vehicle unit speed ($v_x$, $v_y$, $v_z$), vehicle unit acceleration ($a_x$, $a_y$, $a_z$), vehicle unit pitch angle ($\varphi_y$), vehicle unit roll angle ($\varphi_x$), vehicle unit pitch motion ($\omega_y$), vehicle unit roll motion ($\omega_x$), vehicle unit yaw motion ($\omega_z$), and vehicle unit heave ($z$) over the ground surface (101).

4. The computer-implemented method according to any previous claim, where the vehicle (100, 900) is an articulated vehicle, the method comprising determining (S62) the motion parameter separately for two or more vehicle units.

5. The computer-implemented method according to any previous claim, comprising determining (S31) the expected range-Doppler appearance (400, 600, 700, 800) of the radar backscatter from the ground surface (101, 920) at least in part from a nominal radar transceiver geometry.

6. The computer-implemented method according to any previous claim, comprising determining (S32) the expected range-Doppler appearance (400, 600, 700, 800) of the radar backscatter from the ground surface (101, 920) at least in part from a predicted motion of the vehicle (100, 900).

7. The computer-implemented method according to claim 6, where the predicted motion of the vehicle is determined (S321) at least in part based on an inertial measurement unit, IMU, output signal (1020).

8. The computer-implemented method according to any previous claim, comprising determining (S33) the expected range-Doppler appearance (400, 600, 700, 800) of the radar backscatter from the ground surface (101, 920) at least in part from a predicted vehicle unit pitch angle ($\varphi_y$) and/or a predicted vehicle unit roll angle ($\varphi_x$) of the vehicle (100, 900).

9. The computer-implemented method according to any previous claim, comprising determining (S34) the expected range-Doppler appearance (400, 600, 700, 800) of the radar backscatter from the ground surface (101, 920) at least in part from previous range-Doppler appearances of received radar backscatter.

10. The computer-implemented method according to any previous claim, comprising determining (S35) the expected range-Doppler appearance (400, 600, 700, 800) of the radar backscatter from the ground surface (101, 920) at least in part from data received from one or more other vehicles.

11. The computer-implemented method according to any previous claim, comprising obtaining (S41) the range-Doppler filter as a set of discrete weights (420) indexed by range and Doppler of the received radar backscatter and/or a weighting function over range and Doppler.

12. The computer-implemented method according to any previous claim, comprising obtaining (S42) the range-Doppler filter as a boundary region (410) which identifies a set of ranges and corresponding Doppler values to be used in determining the motion parameter of the vehicle (100, 900).

13. The computer-implemented method according to any previous claim, comprising obtaining (S43) the range-Doppler filter (410, 420) at least in part based on antenna characteristics of the at least one radar transceiver (180, 910).

14. The computer-implemented method according to any previous claim, comprising obtaining (S44) the range-Doppler filter (410, 420) at least in part based on an estimated error characteristic of the expected motion of the vehicle (100, 900) relative to the ground surface (101, 920).

15. The computer-implemented method according to any previous claim, comprising determining (S8) a signal quality metric for each of the at least one radar transceiver based on an energy of the received radar backscatter after processing by the range-Doppler filter (410, 420).

16. The computer-implemented method according to any previous claim, comprising detecting (S9) one or more obstacles on the ground surface (101, 920) supporting the vehicle (100, 900), at least in part by a comparison of the received radar backscatter before and after processing by the range-Doppler filter (410, 420).

17. A computer program product comprising program code for performing, when executed by processing circuitry, the method of any of claims 1-16.

18. A non-transitory computer-readable storage medium comprising instructions, which when executed by processing circuitry, cause the processing circuitry to perform the method of any of claims 1-16.

19. A vehicle control unit (130) configured to determine a motion parameter of a vehicle (100, 900), the control unit comprising processing circuitry arranged to

configure at least one radar transceiver (180, 910) to emit a respective radar signal (185) towards a ground surface (101, 920) supporting the vehicle (100, 900),
receive radar backscatter from the ground surface (101, 920), where the radar backscatter is indicative of a radial velocity of the ground surface relative to the radar transceiver (180, 910) in dependence of a range from the radar transceiver (180, 910) to the ground surface (101, 920), determine an expected range-Doppler appearance (400, 600, 700, 800) of the radar backscatter from the ground surface (101, 920), based at least in part on an expected motion of the vehicle (100, 900) relative to the ground surface (101, 920),
obtain a range-Doppler filter (410, 420) based on the expected range-Doppler appearance (400, 600, 700, 800) of the radar backscatter,
process the received radar backscatter by the range-Doppler filter (410, 420), and
determine the motion parameter of the vehicle (100, 900) based on the processed radar backscatter.

**20.** A vehicle (100, 900) comprising a control unit (130) according to claim 19.

**21.** A computer-implemented method for determining a signal quality metric associated with at least one radar transceiver (180) of a vehicle (100, 900), the method comprising configuring (S1) the at least one radar transceiver (180, 910) to emit a respective radar signal (185) towards a ground surface (101, 920) supporting the vehicle (100, 900),

receiving (S2) radar backscatter from the ground surface (101, 920), where the radar backscatter is indicative of a radial velocity of the ground surface relative to the radar transceiver (180, 910) in dependence of a range from the radar transceiver (180, 910) to the ground surface (101, 920),
determining (S3) an expected range-Doppler appearance (400, 600, 700, 800) of the radar backscatter from the ground surface (101, 920), based at least in part on an expected motion of the vehicle (100, 900) relative to the ground surface (101, 920),
obtaining (S4) a range-Doppler filter (410, 420) based on the expected range-Doppler appearance (400, 600, 700, 800) of the radar backscatter,
processing (S5) the received radar backscatter by the range-Doppler filter (410, 420), and determining (S8) the signal quality metric for each of the at least one radar transceiver based on an energy of the received radar backscatter after processing by the range-Doppler filter (410, 420).

**22.** A computer-implemented method for detecting obstacles on a ground surface (101) supporting a vehicle (100, 900), the method comprising

configuring (S 1) at least one radar transceiver (180, 910) to emit a respective radar signal (185) towards the ground surface (101, 920) supporting the vehicle (100, 900),
receiving (S2) radar backscatter from the ground surface (101, 920), where the radar backscatter is indicative of a radial velocity of the ground surface relative to the radar transceiver (180, 910) in dependence of a range from the radar transceiver (180, 910) to the ground surface (101, 920),
determining (S3) an expected range-Doppler appearance (400, 600, 700, 800) of the radar backscatter from the ground surface (101, 920), based at least in part on an expected motion of the vehicle (100, 900) relative to the ground surface (101, 920),
obtaining (S4) a range-Doppler filter (410, 420) based on the expected range-Doppler appearance (400, 600, 700, 800) of the radar backscatter,
processing (S5) the received radar backscatter by the range-Doppler filter (410, 420), and detecting (S9) one or more obstacles on the ground surface (101, 920) supporting the vehicle (100, 900), at least in part by a comparison of the received radar backscatter before and after processing by the range-Doppler filter (410, 420).

**Amended claims in accordance with Rule 137(2) EPC.**

**1.** A computer-implemented method for determining a motion parameter of a vehicle (100, 900), the method comprising

configuring (S1) at least one radar transceiver (180, 910) to emit a respective radar signal (185) towards a ground surface (101, 920) supporting the vehicle (100, 900),
receiving (S2) radar backscatter from the ground surface (101, 920), where the radar backscatter is indicative of a radial velocity - Doppler velocity ($v$) - of the ground surface relative to the radar transceiver (180, 910) in dependence of a range ($r$) from the radar transceiver (180, 910) to the ground surface (101, 920),
determining (S3) an expected range-Doppler appearance (400, 600, 700, 800) of the radar backscatter from the ground surface (101, 920), based at least in part on an expected motion of the vehicle (100, 900) relative to the ground surface (101, 920), wherein the expected motion comprises known or assumed current vehicle motion, and wherein the expected range-Doppler appearance is defined as a collection of tuples ($v, r$) defining a range-Doppler power spectrum,
obtaining (S4) a range-Doppler filter (410, 420) based on the expected range-Doppler appearance (400, 600, 700, 800) of the radar backscatter, wherein the range-Doppler filter passes tuples ($v, r$) of the expected range-Doppler appearance,
processing (S5) the received radar backscatter by the range-Doppler filter (410, 420), and determining (S6) the motion parameter of the vehicle (100, 900) based on agreement of the expected range-Doppler appearance with the received radar backscatter power as indicated by the processed radar backscatter.

**2.** The computer-implemented method according to claim 1, further comprising controlling (S7) motion of the vehicle (100, 900) based on the determined motion parameter.

3.  The computer-implemented method according to claim 1 or 2, comprising determining (S61) the motion parameter as a parameter comprising any of: vehicle unit speed ($v_x$, $v_y$, $v_z$), vehicle unit acceleration ($a_x$, $a_y$, $a_z$), vehicle unit pitch angle ($\varphi_y$), vehicle unit roll angle ($\varphi_x$), vehicle unit pitch motion ($\omega_y$), vehicle unit roll motion ($\omega_x$), vehicle unit yaw motion ($\omega_z$), and vehicle unit heave ($z$) over the ground surface (101).

4.  The computer-implemented method according to any previous claim, where the vehicle (100, 900) is an articulated vehicle, the method comprising determining (S62) the motion parameter separately for two or more vehicle units.

5.  The computer-implemented method according to any previous claim, comprising determining (S31) the expected range-Doppler appearance (400, 600, 700, 800) of the radar backscatter from the ground surface (101, 920) at least in part from a nominal radar transceiver geometry.

6.  The computer-implemented method according to any previous claim, comprising determining (S32) the expected range-Doppler appearance (400, 600, 700, 800) of the radar backscatter from the ground surface (101, 920) at least in part from a predicted motion of the vehicle (100, 900).

7.  The computer-implemented method according to claim 6, where the predicted motion of the vehicle is determined (S321) at least in part based on an inertial measurement unit, IMU, output signal (1020).

8.  The computer-implemented method according to any previous claim, comprising determining (S33) the expected range-Doppler appearance (400, 600, 700, 800) of the radar backscatter from the ground surface (101, 920) at least in part from a predicted vehicle unit pitch angle ($\varphi_y$) and/or a predicted vehicle unit roll angle ($\varphi_x$) of the vehicle (100, 900).

9.  The computer-implemented method according to any previous claim, comprising determining (S34) the expected range-Doppler appearance (400, 600, 700, 800) of the radar backscatter from the ground surface (101, 920) at least in part from previous range-Doppler appearances of received radar backscatter.

10. The computer-implemented method according to any previous claim, comprising determining (S35) the expected range-Doppler appearance (400, 600, 700, 800) of the radar backscatter from the ground surface (101, 920) at least in part from data received from one or more other vehicles, wherein the received data pertains to expected range-Doppler appearance determined by the one or more other vehicles.

11. The computer-implemented method according to any previous claim, comprising obtaining (S41) the range-Doppler filter as a set of discrete weights (420) indexed by range and Doppler of the received radar backscatter and/or a weighting function over range and Doppler.

12. The computer-implemented method according to any previous claim, comprising obtaining (S42) the range-Doppler filter as a boundary region (410) which identifies a set of ranges and corresponding Doppler values to be used in determining the motion parameter of the vehicle (100, 900).

13. The computer-implemented method according to any previous claim, comprising obtaining (S43) the range-Doppler filter (410, 420) at least in part based on antenna characteristics of the at least one radar transceiver (180, 910).

14. The computer-implemented method according to any previous claim, comprising obtaining (S44) the range-Doppler filter (410, 420) at least in part based on an estimated error characteristic of the expected motion of the vehicle (100, 900) relative to the ground surface (101, 920).

15. The computer-implemented method according to any previous claim, further comprising determining (S8) a signal quality metric for each of the at least one radar transceiver based on an energy of the received radar backscatter after processing by the range-Doppler filter (410, 420).

16. The computer-implemented method according to any previous claim, further comprising detecting (S9) one or more obstacles on the ground surface (101, 920) supporting the vehicle (100, 900), at least in part based on disagreement between the expected range-Doppler appearance and the received radar backscatter power as indicated by a comparison of the received radar backscatter before and after processing by the range-Doppler filter (410, 420).

17. A computer program product comprising program code for performing, when executed by processing circuitry, the method of any of claims 1-16.

18. A non-transitory computer-readable storage medium comprising instructions, which when executed by processing circuitry, cause the processing circuitry to perform the method of any of claims 1-16.

19. A vehicle control unit (130) configured to determine a motion parameter of a vehicle (100, 900), the control unit comprising processing circuitry arranged to configure at least one radar transceiver (180, 910) to emit a respective radar signal (185) towards a ground surface (101, 920) supporting the vehicle (100, 900),

receive radar backscatter from the ground surface (101, 920), where the radar backscatter is indicative of a radial velocity - Doppler velocity ($v$) - of the ground surface relative to the radar transceiver (180, 910) in dependence of a range (r) from the radar transceiver (180, 910) to the ground surface (101, 920),
determine an expected range-Doppler appearance (400, 600, 700, 800) of the radar backscatter from the ground surface (101, 920), based at least in part on an expected motion of the vehicle (100, 900) relative to the ground surface (101, 920), wherein the expected motion comprises known or assumed current vehicle motion, and wherein the expected range-Doppler appearance is defined as a collection of tuples ($v, r$) defining a range-Doppler power spectrum,
obtain a range-Doppler filter (410, 420) based on the expected range-Doppler appearance (400, 600, 700, 800) of the radar backscatter, wherein the range-Doppler filter passes tuples ($v, r$) of the expected range-Doppler appearance,
process the received radar backscatter by the range-Doppler filter (410, 420), and
determine the motion parameter of the vehicle (100, 900) based on agreement of the expected range-Doppler appearance with the received radar backscatter power as indicated by the processed radar backscatter.

20. A vehicle (100, 900) comprising a control unit (130) according to claim 19.

FIG. 1

FIG. 2A

FIG. 2B

FIG. 3

FIG. 4

FIG. 5A

FIG. 5B

(a) Pitch angle = 10 deg (Braking)

(b) Pitch angle = 20 deg (Braking)

(c) Pitch angle = -10 deg (Acceleration)

(d) Pitch angle = -20 deg (Acceleration)

FIG. 6

FIG. 7

FIG. 8

FIG. 9

1000

Previous motion
parameters

1010

| Radar | 1040 | Low-Level Processing | 1050 | Range-Velocity Map Filtering |

Current motion
parameters

1060

| IMU | 1020 | Motion expectation | 1030

## FIG. 10

S1

S2
S21 S22 S23

S3
S31 | S32 S321 | S33 S34 S35

S4
S41 S42 S43 S44

S5

S6
S61 S62

S7

S8

S9

## FIG. 11

FIG. 12

Europäisches
Patentamt

European
Patent Office

Office européen
des brevets

# EUROPEAN SEARCH REPORT

**Application Number**

EP 24 15 6347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/097406 A1 (KOBORI TETSUYA [JP] ET AL) 6 April 2017 (2017-04-06) | 1-4,8, 10-12, 14,17-20 | INV. G01S13/60 G01S7/03 |
| Y | * abstract; figures 1, 3B, 4A, 4B, 5A, 5B, 5C, 6, 7A, 7B * <br> * paragraphs [0002], [0022] - [0031], [0037], [0038], [0044] - [0071] * <br> ----- | 5-7,9, 13,15, 16,21,22 | G01S7/292 G01S7/35 G01S7/41 G01S13/931 |
| Y | US 2020/200891 A1 (BARRA JÉRÉMY [FR] ET AL) 25 June 2020 (2020-06-25) | 5,13 | ADD. G01S7/40 |
| A | * abstract; figures 2, 3A, 3B, 8 * <br> * paragraphs [0001], [0046] - [0051], [0059] - [0060] * <br> ----- | 1-4, 6-12, 14-22 | |
| Y | PARK CHANUL ET AL: "Ground Reflection-Based Misalignment Detection of Automotive Radar Sensors", IEEE ACCESS, vol. 11, 30 June 2023 (2023-06-30), pages 66949-66959, XP093187555, USA ISSN: 2169-3536, DOI: 10.1109/ACCESS.2023.3291143 | 5-7,9,13 | |
| A | * abstract; figures 2, 6, 7 * <br> * page 66954, left-hand column, lines 1-34 * <br> ----- | 1-4,8, 10-12, 14-22 | TECHNICAL FIELDS SEARCHED (IPC) <br><br> G01S |
| X | DE 10 2004 024695 A1 (DAIMLER CHRYSLER AG [DE]) 15 December 2005 (2005-12-15) | 21 | |
| Y | * paragraphs [0009], [0012], [0016], [0017] * | 15,21 | |
| A | | 1-14, 16-20,22 | |
| X | WO 2023/008471 A1 (DENSO CORP [JP]) 2 February 2023 (2023-02-02) | 22 | |
| Y | * the whole document * | 16,22 | |
| A | | 1-15, 17-21 | |

-/--

The present search report has been drawn up for all claims

| Place of search | Date of completion of the search | Examiner |
|---|---|---|
| Munich | 24 September 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................................

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 24 15 6347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | & US 2024/168150 A1 (KURONO YASUHIRO [JP] ET AL) 23 May 2024 (2024-05-23)<br>* figures 1, 2, 5-7 *<br>* paragraphs [0029], [0030], [0039] - [0044], [0049], [0050], [0060] - [0068] * | | |
| | ----- | | |
| | | | **TECHNICAL FIELDS SEARCHED (IPC)** |

The present search report has been drawn up for all claims

| Place of search | Date of completion of the search | Examiner |
|---|---|---|
| Munich | 24 September 2024 | Rodríguez González |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 15 6347

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

# LACK OF UNITY OF INVENTION
## SHEET B

The Search Division considers that the present European patent application does not comply with the requirements of unity of invention and relates to several inventions or groups of inventions, namely:

```
1. claims: 1-14, 17-20

    how to optimize the design of the filters for the
    measurement of the speed over ground
                        - - -

2. claims: 15, 21

    how to perform monitoring of the quality of the radar
    measurements
                        - - -

3. claims: 16, 22

    how to provide an alternative object detection
                        - - -
```

**ANNEX TO THE EUROPEAN SEARCH REPORT
ON EUROPEAN PATENT APPLICATION NO.**

EP 24 15 6347

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| US 2017097406 | A1 | 06-04-2017 | CN | 106170713 A | 30-11-2016 |
| | | | EP | 3124994 A1 | 01-02-2017 |
| | | | JP | 6384018 B2 | 05-09-2018 |
| | | | JP | 2015184156 A | 22-10-2015 |
| | | | TW | 201602612 A | 16-01-2016 |
| | | | US | 2017097406 A1 | 06-04-2017 |
| | | | WO | 2015146625 A1 | 01-10-2015 |
| US 2020200891 | A1 | 25-06-2020 | EP | 3671268 A1 | 24-06-2020 |
| | | | FR | 3090893 A1 | 26-06-2020 |
| | | | US | 2020200891 A1 | 25-06-2020 |
| DE 102004024695 | A1 | 15-12-2005 | NONE | | |
| WO 2023008471 | A1 | 02-02-2023 | CN | 117716258 A | 15-03-2024 |
| | | | DE | 112022003742 T5 | 29-05-2024 |
| | | | JP | 7424548 B2 | 30-01-2024 |
| | | | JP | WO2023008471 A1 | 02-02-2023 |
| | | | US | 2024168150 A1 | 23-05-2024 |
| | | | WO | 2023008471 A1 | 02-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040138802 A1
- WO 2023169746 A1
- US 20040138802 A